**Europäisches Patentamt**

**European Patent Office**

**Office européen des brevets**

(11) Publication number: **0 114 509**
**B1**

# (12) EUROPEAN PATENT SPECIFICATION

(45) Date of publication of patent specification: **03.06.87**

(21) Application number: **83307860.3**

(22) Date of filing: **22.12.83**

(51) Int. Cl.⁴: **G 11 B 21/10,** G 11 B 7/08,
G 11 B 5/58

(54) **Record disc reproducing apparatus.**

(30) Priority: **28.12.82 JP 227721/82**

(43) Date of publication of application:
**01.08.84 Bulletin 84/31**

(45) Publication of the grant of the patent:
**03.06.87 Bulletin 87/23**

(84) Designated Contracting States:
**DE GB NL**

(56) References cited:
**EP-A-0 063 936**
**GB-A-2 010 550**
**US-A-4 285 015**
**US-A-4 405 956**

**Patent Abstracts of Japan vol. 7, no. 18, 25
January 1983 & JP-A-57-172573**

(73) Proprietor: **Kabushiki Kaisha Toshiba
72, Horikawa-cho Saiwai-ku
Kawasaki-shi Kanagawa-ken 210 (JP)**

(72) Inventor: **Katayama, Yoshitaka c/o Patent
Division
Tokyo Shibaura Denki K. K. 72, Horikawa-cho
Saiwai-ku Kawasaki-shi Kanagawa-ken (JP)**

(74) Representative: **Newstead, Michael John et al
Haseltine Lake & Co. 28 Southampton Buildings
Chancery Lane
London, WC2A 1AT (GB)**

Courier Press, Leamington Spa, England.

## Description

This invention relates to a record disc reproducing apparatus.

There have recently been provided digital record discs for recording data signals such as audio signals or image signals and record disc reproducing apparatus for reproducing the recorded data. The digital record disc of such a type is so arranged that digital data intended for high density recording is recorded in the form of a spiral bit string on one side thereof and reproduced through reading the bit string by means of an optical pick-up using laser beams. Moreover, the record disc reproducing apparatus is used to read the recorded data by making the optical pick-up follow the recorded bit string by a tracking control system and to process the read-out signal in a predetermined manner so as to convert the signal into the original analogue form signal before recording, for example as an audio or video output signal.

As is well known, digital data accompanied by address data indicating the address of the digital data is written in the program area of the digitial record disc. For instance, in a CD (compact disc) type digital record disc (hereinafter called simply a disc), digital data as audio signals in a digital form and their digital data track numbers, indexes and addresses, and address data indicating absolute time after the reproduction of the disc is started, are recorded.

A record disc reproducing apparatus for the CD type disc is provided with a high speed pick-up carrying function performing a fast-forward or fast-reverse operation mode to reproduce desired digital data readily and selectively, and an address search function performing the automatic retrieval of the desired address data within the enormous amount of the data on the disc.

The above-described high speed pick-up carrying function works so that, when it detects that the fast-forward or fast-reverse operation button or key has been operated, the pick-up is correspondingly moved in the positive or opposite radial direction of the disc at high speed by, for instance, a pick-up carriage motor. Then, the high speed pick-up carrying function is performed when the search operation button or key has been operated to cause the fast-forwarding or fast-reversing of the pick-up to be automatically carried out, so that the desired address is retrieved.

On the other hand, to ensure that the search function can be quickly made only by designating the track number and the index on the disc, Table of Contents data (hereinafter called TOC data) indicating the digital data on the starting addresses (that is, absolute time) of the digital data to which each of the track numbers is allotted is recorded in the lead-in area thereof. In other words, the record disc reproducing apparatus is so arranged that it stores the TOC data in the lead-in area and that it makes the search function by automatically referring to the starting address corresponding to the track number designated. As a result, the digital data can readily be reproduced with ease.

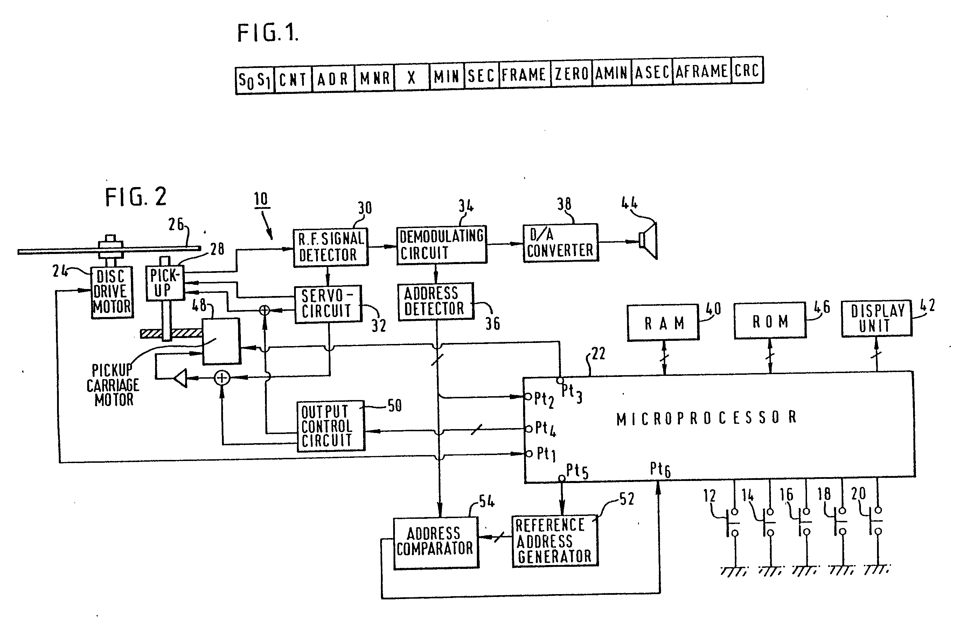

As for digital data recorded on the CD type disc, the prescribed number of frames constitutes one data block, and are accompanied by the prescribed units of subcodes in addition to the data converted from audio signals in the form of PCM (Pulse code modulation). Among them, a subcode Q is an address data and the like for the recorded data and has a format shown in Fig. 1.

One unit of the subcode Q reproduced in the program area is, as shown, formed with the data reproduced in the order of the following items:

(1) $S_0$, $S_1$: 2 bits synchronous pattern data section indicating the start of the subcode Q;

(2) CNT: 4 bits control data section distinguishing between a two channel program and a four channel program, and indicating a presence or an absence of pre-emphasis and a permission or a prohibition of copying;

00x0: 2 ch., emphasis OFF
10x0: 4 ch., emphasis ON
00x1: 2 ch., emphasis OFF
10x1: 4 ch., emphasis ON
xx0x: prohibition of copying
xx1x: permission of copying

(3) ADR: 4 bits mode data section indicating the data mode of the subcode Q;

Mode 1 (BCD 1):Address Mode
Mode 2 (BCD 2): Disc Catalogue Number Mode
Mode 3 (BCD 3): Special information Mode

(4) MNR: 8 bits (2 figures in BCD) program number index data section;

(5) X: 8 bits sub-index data section of the program;

(6) MIN: 8 bits first "minutes" data section indicating to the order of "minutes" within the time elapsed since the reproduction of the prescribed program number was commenced (hereinafter referred to as relative time);

(7) SEC: 8 bits first "seconds" data section indicating to the order of "seconds" within the relative time;

(8) FRAME: 8 bits first decimal place of the "seconds" data section indicating to the order of a decimal place of a "second", dividing one "second" with a prescribed digit number, e.g. 75, within the relative time;

(9) ZERO: Section composed of 8 bits digital 0;

(10) AMID: 8 bits second "minutes" data section indicating to the order of "minutes" within the time elapsed since the reproduction was started from the lead-in area (hereinafter referred as absolute time), which represents the location or the address of the prescribed data;

(11) ASEC: 8 bits second "seconds" data section indicating to the order of "seconds" within the absolute time;

(12) AFRAME: 8 bits second decimal place of the "seconds" data section indicating to the order of a decimal place of a "second", dividing one "second" with the prescribed digit number, e.g. 75, within the absolute time; and

(13) CRC: 16 bits error check code data section for the subcode Q.

The subcode Q formed with the above format is extracted by the record disc reproducing apparatus and not only the state in which each piece data of, for instance, MNR, X, MIN, SEC is being reproduced but also the state in which the pick-up is being fast moved are displayed by the display unit of the record disc reproducing apparatus, so that the desired address can readily be retrieved.

However, since the pick-up of the record disc reproducing apparatus thus constructed is not allowed to come in contact with the disc, it is necessary to arrange the pick-up in such a manner as to perform servo-operation, assuring that it always carries out tracking on the track.

Moreover, the spot of the light beam radiated by the pick-up on the disc is about 1.5 um or less in size and is easily affected by dust and scratches thereon, and this forms one of the reasons for which the servo-operation is readily disturbed.

In other words, when the record disc reproducing apparatus carries out tracking on the disc with dust and scratches, it tends to jump across tracks and fail to satisfactorily perform the reproduction of the disc.

British Patent application GB—A—2010550 discloses a record disc reproducing apparatus for use in reproducing data stored on a disc operative in a playback mode, comprising:

a pick-up assembly for reading data from said disc including address data indicating a nominal absolute time elapsing between the start from a predetermined area and the currently read area at a predetermined volocity in a radial direction with respect to said disc;

motor means for radially moving said pick-up assembly;

means for setting a prescribed pick-up assembly moving mode;

a control circuit for controlling said motor means;

an address data detector responsive to said pick-up assembly for producing a reproduction address signal representative of the address data read by said pick-up assembly;

means for comparing the reproduction address data signal with a reference address data signal and generating a difference signal; and

controller means responsive to the difference signal for generating a signal indicative of the direction the pick-up assembly must move to decrease the difference signal, said signal of said controller means being applied to said control circuit.

This apparatus only discloses a search system setting a target address to be searched.

An object of the present invention is to provide a record disc reproducing apparatus capable of reproducing data stably from a disc having some dust and scratches without track interlacing.

According to the present invention, there is provided a record disc reproducing apparatus for use in reproducing data stored on a disc operative in a playback mode, comprising:

a pick-up assembly for reading data from said disc including address data indicating a nominal absolute time elapsing between the start from a predetermined area and the currently read area at a predetermined velocity in a radial direction with respect to said disc;

motor means for radially moving said pick-up assembly;

means for setting a prescribed pick-up assembly moving mode;

a control circuit for controlling said motor means;

an address data detector responsive to said pick-up assembly for producing a reproduction address signal representative of the address data read by said pick-up assembly;

means for comparing the reproduction address data signal with a reference address data signal and generating a difference signal; and

controller means responsive to the difference signal for generating a signal indicative of the direction of pick-up assembly must move to decrease the difference signal, said signal of said controller means being applied to said control circuit, characterised in that the apparatus further comprises:

processing means for generating the reference address data signal during said prescribed pick-up assembly moving mode operation, said reference address data signal being generated by a timer continuously during the prescribed pick-up assembly moving mode and said timer being variable in its frequency and being preset in correspondence with the reproduction address signal at the start of said prescribed mode operation.

The present invention will now be described by way of example, with reference to the accompanying drawings, in which:—

Fig. 1 is a diagram illustrating the format of a subcode Q recorded on a disc;

Fig. 2 is a circuit block diagram illustrating one embodiment of record disc reproducing apparatus in accordance with the present invention;

Figs. 3(a), (b) are diagrams showing kick pulses of opposite polarity; and

Fig. 4 is a flowchart explanatory of the operation of the record disc reproducing apparatus of Fig. 2.

Referring to Fig. 2 a disc record reproducing apparatus includes a record disc reproducing system 10 which is so controlled as to establish a preselected state by operating switches 12, 14, 16, 18 and 20 as operation keys for playback operation, stop operation, fast-forward operation, fast-reverse operation and search operation respectively through a microprocessor 22 connected thereto through an interface circuit (not shown).

In other words, when the microprocessor 22 in the record disc reproducing system 10 operates to drive a disc drive motor 24 connected to an output port Pt, thereof, digital data stored in a disc 26 is reproduced as an RF signal by a pick-up 28. The reproduced RF signal is sent to an RF signal detection circuit 30. The RF signal detection circuit 30 separates a pick-up servo signal to be supplied to a servo-circuit 32 from another to be supplied to a demodulating circuit 34. The servo-circuit 32 sends various signals to the pick-up 28 for servo controlling purposes, including focusing and tracking control.

The demodulating circuit 34 separates an address signal component for detecting address data from the reproduced signal and supplies the address signal component to an address detector 36, whereas the demodulating circuit 34 generates a demodulated signal (EFM signal) and supplies the signal to a D/A (Digital to Analog) converter 38.

The address data detected from the address detector 36 is applied to an input port $Pt_2$ of the microprocessor 22. If the address data is the aforementioned TOC data reproduced from the disc 26 during the reproduction of the lead-in area of the disc 26, the microprocessor 22 stores the TOC data in a RAM (Random Access Memory) 40 so that the TOC data is used to perform the control function necessary for making a search operation. However, if the address data from the address detector 36 is the data reproduced from the disc 26 during the reproduction of the program area of the disc 30, the microprocessor 22 transmits the address data to a display unit 42.

The reproduced digital data reset in the form of an analogue signal by the D/A converter 38 is subjected to the necessary error correction and memory interleaving and used to drive and sound a loudspeaker 44.

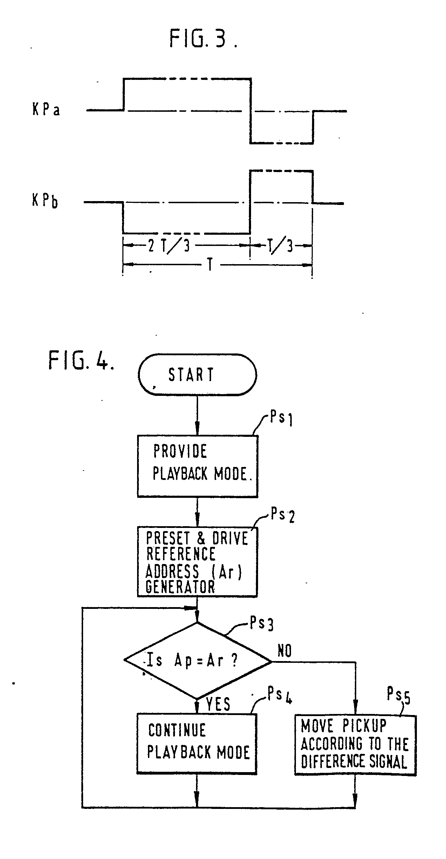

The microprocessor 22 is so arranged that it is driven by a prescribed operation program stored in a ROM (Read Only Memory) 46). For instance, when the fast-forward operation key 16 is operated with the operation program of the ROM 46, the microprocessor 22 generates a three-states kick pulse KPa consisting of positive and negative pulses at the fore and rear parts thereof as shown in Fig. 3 and sends the kick pulse KPa to a pick-up carriage motor 48 from another output port $Pt_3$ thereof. The kick pulse KPa is applied to the pick-up carriage motor 48 through an output control circuit 50 which is described in detail later. Accordingly, the pick-up 28 is moved in an outward direction relative to the disc 26 at high speed while the positive pulse of the kick pulse KPa is applied through the output control circuit 50 and then the energizing force for the pick-up 28 is attenuated while the negative pulse of the kick pulse KPa is applied. As a result, a laser beam of the pick-up 28 is made to move at high speed in the outward direction relative to disc 26 whenever the kick pulse KPa is supplied and the record disc reproducing apparatus is caused to perform the fast-forward operation.

On the other hand, when the fast-reverse operation key 18 is operated, the microprocessor 22 supplies another three-states kick pulse KPb consisting of negative and positive pulses at the fore and rear parts thereof as shown in Fig. 3, opposite to the kick pulse KPa, from the output port $Pt_3$ to

the pick-up carriage motor 48 through the output control circuit 50. Conseqently, the laser beam of the pick-up 28 is moved in an inward direction relative to the disc 26 whenever the kick pulse KPb is outputted, so that the record disc reproducing apparatus performs the fast-reverse operation.

Simultaneously, when the search operation key 20 is operated, the mircroprocessor 22 keeps performing the fast-forward operation or fast-reverse operation according to the difference between an address obtained by the address detector 36 (hereinafter called a reproduction address Ap) and another which should be retrieved until the reproduction address Ap conforms to the one which should be retrieved.

Moreover, when the stop operation key 14 is operated, the microprocessor 22 stops the pick-up carriage motor to carry the pick-up 28 by a stop signal generated from an output port $Pt_4$ of the microprocessor 22. The microprocessor 22 also stops the disc drive motor 24 to rotate the disc 26 so as to bring the record disc reproducing system 10 to a standstill, thus making the disc 26 attachable and detachable to and from the apparatus.

When the playback operation key 12 is operated, the microprocessor 22 first places the record disc reproducing system 10 in a playback state and presets a reference address generator 52 connected to an output port $Pt_5$ thereof with the reproduction address Ap supplied from the address detector 36. The reference address generator 52 comprises, for instance, a presettable counter and an oscillator, to generate a reference address Ar which is equivalent to the reproduction address Ap but which is generated independently of the reproduction address Ap after the preset of the reference address generator 52. The reference address Ar generated from the reference address generator 52 is applied to one of the inputs of an address comparator 54 comprising a conventional digital comparator while the reproduction address Ap from the address detector 36 is applied to another input of the address comparator 54.

The address comparator 54 is so arranged to compare the reproduction address Ap from the address detector 36 with the reference address Ar from the reference address generator 52 and then generates a compared result signal varying in correspondence with the difference between the reproduction address Ap and the reference address Ar. The compared result signal is applied to another input port $Pt_6$ of the microprocessor 22. The microprocessor 22 generates at the output port $Pt_3$ the kick pulse KPa or KPb in accordance with the polarity of the compared result signal applied to the input port $Pt_6$. That is, for instance, the address comparator 54 produces a positive signal when the reproduction address Ap from the address detector 36 is smaller than the reference address Ar from the reference address generator 52, whereas the address comparator 54 produces a negative signal when the reproduction address Ap is larger than the reference address Ar. The microprocessor 22 generates the kick pulse KPa or KPb in accordance with the positive or the negative compared result signal.

The kick pulse KPa or KPb generated in the playback operation has a pulse width shorter than that generated in the search operation. On the other hand, the output control circuit 50 is so arranged to distinguish the pulse width of the kick pulse KPa or KPb being longer or shorter than the prescribed value and deliver the kick pulse KPa or KPb to the pick-up carriage motor 48 or the pick-up 28, according to the pulse width of the kick pulse KPa or KPb being longer or shorter than the prescribed value. Thus, the kick pulse KPa or KPb generated in the search operation and having relatively long pulse width is controlled to be applied to the pick-up carriage motor 48 by the output control circuit 50, whereas the kick pulse KPa or KPb generated in the playback operation and having relatively short pulse width is controlled to the applied to the pick-up 28. The positive or negative pulse at the forepart of the kick pulse KPa or KPb applied to the pick-up 28 drives a tracking actuator (not shown) in the pick-up 28 so that the laser beam moves in an outward or inward direction relative to the disc 26 for the pulse width of the positive or negative forepart pulse. During the application of the forepart pulse of the kick pulse KPa or KPb to the tracking actuator, the servo-circuit 32 drives the pick-up carriage motor 48 in an outward or inward direction relative to the disc 26 according to the tracking error signal caused by the movement of the tracking actuator so as to compensate the tracking error.

The rearpart pulse of the kick pulse KPa or KPb is set to have a pulse width of half of the forepart pulse by the microprocessor 22 so that the rearpart pulse drives the tracking actuator to be quickly restored without overdriving the tracking acutator in the opposite direction.

Further, the kick pulse KPa or KPb is controlled as regards its pulse width in accordance with the compared result signal, in other words in accordance with the difference between the reproduction address Ap and the reference address Ar. When the difference between the reproduction and reference addresses Ap and Ar corresponds to an address value indicating one of two or three tracks' divergence, etc., the microprocessor 22 generates the kick pulse KPa or KPb with one or two or three unit lengths of pulse width, etc. Therefore, the pick-up 28 jumps on the different track of the disc 26 apart from the present tracing track by one or two or three tracks, etc., according to the respective pulse width of the kick pulse KPa or KPb.

The operation of the record disc reproducing apparatus is illustrated in Fig. 4. When the playback operation key 12 is operated as shown by the step $Ps_1$, the microprocessor 22 places the disc reproducing system 10 in the playback operation mode. Next, the microprocessor 22 presets the reference address generator 52 with the reproduction address Ap and then drives the reference address generator 52 to cause it to generate the reference address Ar as shown by the step $Ps_2$.

Subsequently, the address comparator 54 compares the reproduction address Ap with the reference address Ar and determines whether they conform to each other as shown by the step $Ps_3$. When the reproduction address Ap conforms to the reference address Ar, the disc reproducing system 10 continues the playback operation as it is without applying the kick pulse to the pick-up 28 as shown by the step $Ps_4$. The above state means that the pick-up 28 is tracing the right track of the disc 26. When the reproduction address Ap differs from the reference address Ar, on the contrary, the microprocessor 22 moves the pick-up 28 by predetermined tracks so that the reproduction address Ap detected after the pick-up 28 moves to conform to the reference address Ar as shown by the step $Ps_5$. This state means that the pick-up 28 is located on the right track, if the pick-up 28 failed to trace the prescribed track caused by any trouble, for instance signal dropouts due to dust or damaged parts on the disc 26 or a foreign mechanical force on the pick-up 28.

However, the steps $Ps_4$ and $Ps_5$ are carried out as if they were going round the step $Ps_3$ at high speed, while the pick-up carriage motor 48 is operated on a real time basis to make the reproduction address Ap always conform to the reference address Ar.

In an alternative embodiment, the microprocessor 22 is programmed to generated the kick pulse KPa or KPb with a prescribed unit length of pulse width when the address comparator 54 detects a difference between the reproduction address Ap and the reference address Ar, regardless of the value of the difference, while the pulse width of the kick pulse KPa or KPb is set so that the pick-up 28 moves by one track when the kick pulse KPa or KPb is applied to the pick-up 28. In this arrangement, the pick-up 28 is moved one track step by step by checking the difference between the reproduction address Ap and the reference address Ar after each step until the reproduction address Ap conforms to the reference address Ar.

In a further alternative embodiment, the microprocessor 22 is programmed to generate the kick pulse KPa or KPb with the prescribed unit length of pulse width both in the fast-forward or the fast-reverse operation and the playback operation. Therefore, the output control circuit 50 can be eliminated.

The apparatus shown in Fig. 2 will operate to reproduce the reproduction address Ap recorded with the digital data at the program area of the disc 26 in conformity with the reference address Ar even if there occurs track interlacing due to dust and scratches on the disc 26 and this makes possible always the stable playback operation of the disc reproducing apparatus. Moreover, by raising the accuracy of the reference address generator 52 up to the order of the AFRAME portion of the address (absolute time), the limit of the detection of track interlacing can be more improved and this is advantageous.

By making the frequency of the oscillator of the reference address generator 52 variable, the tracing speed of the pick-up 28 or the reproduction speed of the disc can readily be controlled and furthermore a controller for special use in fast-forwarding and fast-reversing can also be omitted. In other words, each of the playback, fast-forwarding and fast-reverse operations can be realized with roughly the same arrangement by changing the intervals at which the ·reference address Ar of the reference Address generator 52 is generated.

As above described, the embodiments of the present invention make it possible to provide a superior disc record reproducing apparatus capable of reproducing digital data recorded on a disc having dust and scratches, for instance, stably without causing track interlacing.

**Claims**

1. A record disc reproducing apparatus for use in reproducing data stored on a disc operative in a playback mode, comprising:

a pick-up assembly (28) for reading data from said disc including address data indicating a nominal absolute time elapsing between the start from a predetermined area and the currently read area at a predetermined velocity in a radial direction with respect to said disc;

motor means (48) for radially moving said pick-up assembly;

means (12, 14, 16, 18, 20) for setting a prescribed pick-up assembly moving mode;

a control circuit (50) for controlling said motor means;

an address data detector (36) responsive to said pick-up assembly for producing a reproduction address signal representative of the address data read by said pick-up assembly;

means (54) for comparing the reproduction address data signal with a reference address data signal and generating a difference signal; and

controller means (22) responsive to the difference signal for generating a signal indicative of the direction the pick-up assembly (28) must move to decrease the difference signal, said signal of said controller means being applied to said control circuit, characterised in that the apparatus further comprises:

processing means (52) for generating the reference address data signal during said prescribed pick-up assembly moving mode operation, said reference address data signal being generated by a timer continuously during the prescribed pick-up assembly moving mode and said timer being variable in its frequency and being preset in correspondence with the reproduction address signal at the start of said prescribed mode operation.

2. A record disc reproducing apparatus according to claim 1, characterised in that said controller means (22) generates a signal indicative of the distance and the direction said pick-up assembly (28) must move to achieve a zero difference.

**Patentansprüche**

1. Wiedergabegerät für eine Aufnahmeplatte zur Wiedergabe von auf einer Platte gespeicherten Daten, das in einem Abspielmodus wirksam ist,

mit einer Pick-up-Einheit (28) zum Auslesen von Daten einschließlich Adreßdaten von der Platte, wobei die Adreßdaten eine nominale Absolutzeit anzeigen, die zwischen dem Start von einem · vorbestimmten Bereich und dem laufenden Auslesebereich bei einer vorbestimmten Geschwindigkeit in radialer Richtung relativ zu der Platte verstreicht,

mit einer Antriebseinrichtung (28) für die radiale Bewegung der Pick-up-Einheit,

mit einer Einrichtung (12, 14, 16, 18, 20) zum Einstellen eines vorgeschriebenen Bewegungsmodus für die Pick-up-Einheit,

mit einer Steuerschaltung (50) für die Steuerung der Antriebseinrichtung,

mit einem Adreßdatendetektor (36), der abhängig von der Pick-up-Einheit ein Wiedergabe-Adreßsignal erzeugt, das für die von der Pick-up-Einheit ausgelesenen Adreßdaten kennzeichnend ist,

mit einer Einrichtung (54) zum Vergleichen des Wiedergabe-Adreßdatensignals mit einem Referenz-Adreßdatensignal und Erzeugen eines Differenzsignals, und

mit einer Steuereinrichtung (22), die abhängig von dem differenzsignal ein Signal erzeugt, das für die Richtung kennzeichnend ist, in der die Pick-up-Einheit zu bewegen ist, um das Differenzsignal zu verkleinern, wobei das Signal von der Steuereinrichtung der Steuerschaltung zugeführt wird, gekennzeichnet durch

eine Verarbeitungseinrichtung (32) zum Erzeugen des Referenz-Adreßdatensignals während des Betriebs in dem vorgeschriebenen Bewegungsmodus der Pick-up-Einheit, wobei dieses Referenz-Adreßdatensignal während des vorgeschriebenen Bewegungsmodus der Pick-up-Einheit mit Hilfe eines Zeitgebers kontinuierlich erzeugt wird, der in seiner Frequenz variabel ist und beim Start des Betriebs in dem vorgeschriebenen Bewegungsmodus entsprechend dem Wiedergabe-Adreßsignal voreingestellt ist.

2. Wiedergabegerät nach Anspruch 1, dadurch gekennzeichnet, daß die Steuereinrichtung (22) ein Signal erzeugt, das für die Entfernung und die Richtung kennzeichnend ist, die von der Pick-up-Einheit zum Erreichen einer Null-Differenz au durchlaufen sind.

**Revendications**

1. Un appareil de reproduction de disque d'enregistrement utilisable dans la reproduction de données enregistrées sur un disque fonctionnant dans le mode de présonorisation, contenant:

un ensemble de lecture (28) pour lire des données provenant dudit disque et incluant des données d'adresse indiquant une durée absolue nominale écoulée entre le début d'une zone prédéterminée et la zone actuellement lue à une vitesse prédéterminée dans une direction radiale par rapport audit disque;

des moyens (48) formant moteur pour déplacer radialement ledit ensemble de lecture;

des moyens (12, 14, 16, 18, 20) pour régler un mode prescrit de déplacement de l'ensemble de lecture;

un circuit de commande (50) pour contrôler lesdits moyens formant moteur;

un déecteur de données d'adresse (36) répondant audit ensemble de lecture pour produire un signal d'adresse de reproduction représentant les données d'adrésse lues par ledit ensemble de lecture;

des moyens (54) pour comparer le signal de données d'adresse de reproduction avec un signal de données d'adresse de référence et former un signal de différence; et

des moyens (22) formant contrôleur répondant au signal de différence pour former un signal indiquant la direction dont l'ensemble de lecture (28) doit se déplacer pour réduire le signal de différence, ce signal desdits moyens formant contrôleur étant appliqué audit circuit de commande,

caractérisé en ce que l'appareil comprend en outre:

des moyens de traitement (52) pour former le signal de données d'adresse de référence pendant ladite opération sur le mode prescrit de déplacement de l'ensemble de lecture, ledit signal de données d'adresse de référence étant formé d'une manière continue par un horloge pendant le mode prescrit de déplacement de l'ensemble de lecture et ladite horloge étant de fréquence variable et étant pré-réglée en correspondance du signal d'adresse de reproduction au début de ladite opération sur le mode prescrit.

2. Un appareil de reproduction de disque d'enregistrement selon la revendication 1, caractérisé en ce que les moyens (22) formant contrôleur forme un signal indiquant la distance et la direction dont l'ensemble de lecture (28) doit se déplacer pour obtenir une différence égale à zéro.

FIG.1.

| So | S₁ | CNT | ADR | MNR | X | MIN | SEC | FRAME | ZERO | AMIN | ASEC | AFRAME | CRC |
|----|----|-----|-----|-----|---|-----|-----|-------|------|------|------|--------|-----|

FIG.2

## FIG. 3 .

## FIG. 4.

START

PROVIDE
PLAYBACK MODE.   Ps1

PRESET & DRIVE
REFERENCE
ADDRESS (Ar)
GENERATOR   Ps2

Is Ap = Ar ?   Ps3
NO

YES   Ps4

CONTINUE
PLAYBACK MODE

MOVE PICKUP
ACCORDING TO THE
DIFFERENCE SIGNAL   Ps5